# FASCICULE DE BREVET EUROPEEN

(11) **EP 1 465 825 B1**
(45) Date de publication et mention de la délivrance du brevet: **31.08.2005**
(21) Numéro de dépôt: 03729505.2
(22) Date de dépôt: 13.01.2003
(51) Int. Cl.: B65G 13/12, B65G 13/00, B21C 37/06

(54) **SUPPORT POUR ELEMENTS CYLINDRIQUES EN DEFILEMENT ET PROCEDE ET TRANSPORTEUR UTILISANT DE TELS SUPPORTS.**
STÜTZE ZUR BEWEGUNG ZYLINDRISCHER ELEMENTE UND EIN SOLCHE STÜTZEN VERWENDENDES VERFAHREN UND FÖRDEREINRICHTUNG, DIE DIESE STÜTZEN VERWENDET
SUPPORT FOR MOVING CYLINDRICAL ELEMENTS AND A METHOD AND CONVEYOR USING SUCH SUPPORTS

(30) Priorité: 15.01.2002 FR 0200430
(43) Date de publication de la demande: 13.10.2004
(73) Titulaire: COMPAGNIE GENERALE DES MATIERES NUCLEAIRES, 78140 Velizy Villacoublay (FR)
(72) Inventeur: VALENTIN, Michel, F-30200 BAGNOLS SUR CEZE (FR); VERDOLLIN, Jacques, F-69140 RILLIEUX LA PAPE (FR)
(74) Mandataire: Poulin, Gérard
(86) Numéro de dépôt international: PCT/FR2003/000085
(87) Numéro de publication internationale: WO 2003/059791

(56) Documents cités:
- DE-A- 2 808 812
- DE-C- 3 040 447
- FR-A- 1 388 073
- US-A- 1 349 070

## Description

### DOMAINE TECHNIQUE

Le secteur technique de la présente invention est celui des supports susceptibles de recevoir des éléments cylindriques tels que des tubes et d'en assurer l'écoulement dans une direction parallèle à l'axe de ces éléments cylindriques. De plus, le secteur technique de la présente invention concerne celui des transporteurs d'éléments cylindriques et des procédés de transport d'éléments cylindriques utilisant de tels supports. Plus particulièrement, l'invention peut notamment s'appliquer à des supports d'éléments cylindriques destinés à permettre la translation de ces derniers par rapport aux supports, ainsi que la rotation de ces éléments cylindriques selon leur axe lorsqu'ils sont en contact avec ces mêmes supports.

### ETAT DE LA TECHNIQUE ANTERIEURE

Dans ce domaine, on connaît des transporteurs comportant une pluralité de supports de tubes, ces supports disposant chacun d'un galet apte à autoriser le défilement de ces tubes dans une direction parallèle à l'axe de ces tubes (voir US-A-1 349 070). Chaque support comprend un galet ayant une gorge en forme de V destinée à coopérer avec les tubes lors de leur passage sur le support. Ce type de galet est utilisé en raison de la nature des tubes à transporter ainsi que de l'espacement pratiqué entre les différents supports.

En effet, à la sortie d'un support, le tube se retrouve dans une position de porte-à-faux qui entraîne la flexion de son extrémité aval. Cette extrémité aval du tube, en arrivant au support suivant, se trouve à une altitude plus basse que la partie du tube supportée par le galet du support se situant en amont dans la direction de défilement. La forme cylindrique du galet permet alors de réaliser une correction progressive de l'altitude de l'extrémité aval du tube plongeant vers le bas, sans endommager cette extrémité. A la sortie du galet, l'extrémité aval du tube se retrouve alors dans un plan horizontal ayant sensiblement la même altitude que le reste du tube.

Cependant, le système décrit de l'art antérieur présente plusieurs inconvénients.

Dans ce type de transporteur, il est réputé difficile d'effectuer les alignements verticaux et latéraux des supports, ceci en raison de l'ajustement délicat à réaliser des supports les uns par rapport aux autres, mais également en raison de la géométrie propre des tubes qui présente des tolérances de forme et de circularité particulières.

Ce défaut d'alignement rencontré provoque un phénomène de glissement entre les flancs de la gorge en V des galets et les tubes défilant sur ces galets. Ces mouvements se concrétisent par l'arrachement de particules métalliques appartenant à la surface extérieure du tube. Ces particules, une fois arrachées, s'incrustent dans les flancs de la gorge en V des galets, formant ainsi une sorte de surface abrasive.

A la sortie du transporteur, les tubes présentent donc des marques longitudinales sur leur surface extérieure, ces marques altérant par conséquent l'aspect visuel du produit fini.

De plus, il peut s'avérer que de tels transporteurs soient également destinés à permettre une rotation des tubes sur eux-mêmes, par exemple pour effectuer une opération de soudage. Dans ce cas, l'arrachement des particules métalliques du tube va constituer un inconvénient additionnel à celui cité ci-dessus. En effet, les particules incrustées sur les flancs de la gorge en V des galets forment une surface assimilable à une surface abrasive qui amplifie les frottements entre les galets et les tubes lors de la rotation de ces derniers. La conséquence directe de la rotation est l'apparition de marques circulaires sur la surface extérieure des tubes, ces marques s'ajoutant à celles provenant du simple défilement et détériorant encore davantage l'aspect visuel du produit fini.

### EXPOSÉ DE L'INVENTION

Le but de l'invention est donc de présenter un support pour éléments cylindriques réduisant au maximum les effets de marquage sur la surface extérieure de ces éléments cylindriques, lors de leur défilement sur le support.

Un autre but de l'invention est de présenter un transporteur d'éléments cylindriques ainsi qu'un procédé de transport d'éléments cylindriques, ce transporteur et ce procédé utilisant au moins un support tel que celui remédiant au problème technique soulevé ci-dessus.

Pour ce faire, l'invention a pour objet un support pour éléments cylindriques en défilement, ce support comprenant des premiers moyens de guidage aptes à guider les éléments cylindriques à une altitude z₁. Selon l'invention, en aval dans une direction de défilement des éléments cylindriques, le support comprend des seconds moyens de guidage aptes à guider les éléments cylindriques à une altitude z₂ supérieure à z₁, les frottements entre les seconds moyens de guidage et les éléments cylindriques étant plus faibles que les frottements entre les premiers moyens de guidage et les éléments cylindriques.

L'avantage principal de cette invention par rapport aux dispositifs existant de l'art antérieur réside dans l'ajout des seconds moyens de guidage. Selon l'invention, l'élément cylindrique en défilement sur le support n'a qu'un contact bref avec les premiers moyens de guidage. En effet, ce contact a lieu uniquement lorsque l'extrémité aval du tube arrive sur le support, les premiers moyens de guidage cédant ensuite leur rôle aux seconds moyens de guidage du fait de leur possibilité de maintenir les éléments cylindriques à une altitude supérieure à l'altitude à laquelle les premiers moyens de guidage sont aptes à maintenir ces éléments cylindriques. En raison de cette différence d'altitude, le passage des éléments cylindriques sur les seconds moyens de guidage marque la fin du contact entre les premiers moyens de guidage et les éléments cylindriques, et ce durant le reste du défilement de ces éléments.

Les frottements résultant du contact entre les seconds moyens de guidage et les éléments cylindriques étant plus faibles que les frottements résultant du contact entre les premiers moyens de guidage et ces mêmes éléments cylindriques, le phénomène d'arrachement des particules des éléments cylindriques s'en trouve considérablement amoindri, ceci améliorant par conséquent la qualité visuelle du produit fini. Les conséquences néfastes du défaut d'alignement des supports les uns par rapport aux autres sont donc quasiment éradiquées.

De manière préférentielle, les seconds moyens de guidage sont aptes à autoriser une rotation des éléments cylindriques autour d'un axe de ces éléments cylindriques.

L'avantage découlant de cette caractéristique particulière concernant les seconds moyens de guidage consiste en la possibilité de pouvoir faire pivoter l'élément cylindrique sur lui-même, selon son axe, ce qui est particulièrement intéressant lorsque l'on veut réaliser une opération telle qu'une opération de soudage des éléments en défilement.

De plus, cette rotation des éléments cylindriques s'effectue lorsque ces derniers sont en contact avec les seconds moyens de guidage. La rotation entraîne alors moins de marquages circulaires, et ceci en raison de deux facteurs distincts. Le premier facteur concerne la structure même des seconds moyens de guidage qui permettent des frottements moindres par rapport aux frottements rencontrés dans l'art antérieur lors de la rotation des tubes sur les galets. Le second facteur repose quant à lui sur le dédoublement des moyens de guidage, permettant ainsi de faire tourner l'élément cylindrique sur des moyens de guidage n'ayant accumulé que très peu de particules métalliques lors du défilement. Ces deux facteurs contribuent simultanément à minimiser les marquages circulaires des éléments cylindriques en rotation.

De préférence, les seconds moyens de guidage comprennent au moins deux billes porteuses destinées à être en contact avec lesdits éléments cylindriques. Avantageusement, ce système de billes permet d'obtenir un coefficient de frottement le plus faible possible pour éliminer au mieux le marquage des éléments cylindriques.

Les billes porteuses sont, selon un mode de réalisation particulier de l'invention, réalisées en acier inoxydable. De façon avantageuse, ces billes porteuses résistent alors correctement à l'incrustation des particules métalliques provenant des éléments cylindriques. De plus, les aciers inoxydables sont préconisés pour le contact avec des tubes en Zircaloy (marque déposée), ce type de tubes pouvant être transporté par des supports selon l'invention.

Toujours dans un souci de réduction des frottements entre le support et les éléments cylindriques, chaque bille porteuse repose sur une pluralité de billes secondaires situées à l'intérieur d'un logement retenant la bille porteuse.

Préférentiellement, les seconds moyens de guidage comprennent deux billes porteuses ayant chacune leur logement incliné à 45° par rapport à l'axe principal du support, cet axe étant perpendiculaire à la direction de défilement des éléments cylindriques. De manière avantageuse, ceci permet la rotation de l'élément cylindrique sans éjection de ce dernier durant le mouvement de rotation.

De plus, les deux billes sont positionnées de telle sorte que l'une d'entre elles se situe en amont de l'autre, dans la direction de défilement des éléments cylindriques. Cette disposition particulière a été adoptée en raison de la nécessité de garder un ensemble mécanique le plus compact possible, afin de réduire au maximum l'encombrement du support.

De préférence, le support comprend un système de réglage latéral de l'ensemble formé par les premiers et les seconds moyens de guidage, ainsi qu'un système de réglage vertical de ce même ensemble formé par les premiers et les seconds moyens de guidage. Ces deux systèmes de réglage permettent d'effectuer un alignement le plus précis possible lors de l'utilisation de différents supports les uns avec les autres.

Le support selon l'invention peut également comporter des moyens aptes à régler la différence entre l'altitude z₁ et l'altitude z₂, de manière à favoriser le mieux possible le passage des éléments cylindriques entre les premiers et les seconds moyens de guidage. Cette différence d'altitude peut être de 0,5mm environ.

Enfin, les premiers moyens de guidage peuvent comprendre un galet en forme de V. Cette utilisation d'un galet permet avantageusement de redresser l'extrémité de l'élément cylindrique dans un plan horizontal, de façon à lui faire aborder les seconds moyens de guidage de la meilleure façon possible.

L'invention a également pour objet un transporteur d'éléments cylindriques comprenant au moins un support tel que décrit précédemment, chaque support étant apte à autoriser le défilement des éléments cylindriques.

De plus, l'invention a pour objet un procédé de transport d'éléments cylindriques sur au moins un support tel que décrit précédemment, ces éléments cylindriques, lors de leur passage sur chaque support, subissant les étapes suivantes :
- un guidage primaire à l'aide de premiers moyens de guidage,
- un guidage secondaire se substituant au guidage primaire à l'aide de seconds moyens de guidage, les frottements résultant du guidage secondaire étant plus faibles que les frottements résultant du guidage primaire.

D'autres caractéristiques et avantages de l'invention apparaîtront dans la description détaillée, non limitative, ci-dessous.

### BRÈVE DESCRIPTION DES DESSINS

Cette description sera faite au regard des dessins annexés parmi lesquels :
- la figure 1 représente une vue de face d'un support selon un mode de réalisation préféré de l'invention,
- la figure 2 représente une vue de côté d'un support selon un mode de réalisation préféré de l'invention,
- la figure 3 représente une vue de dessus d'un support selon un mode de réalisation préféré de l'invention.

### EXPOSÉ DÉTAILLÉ DE MODES DE RÉALISATION PREFERES

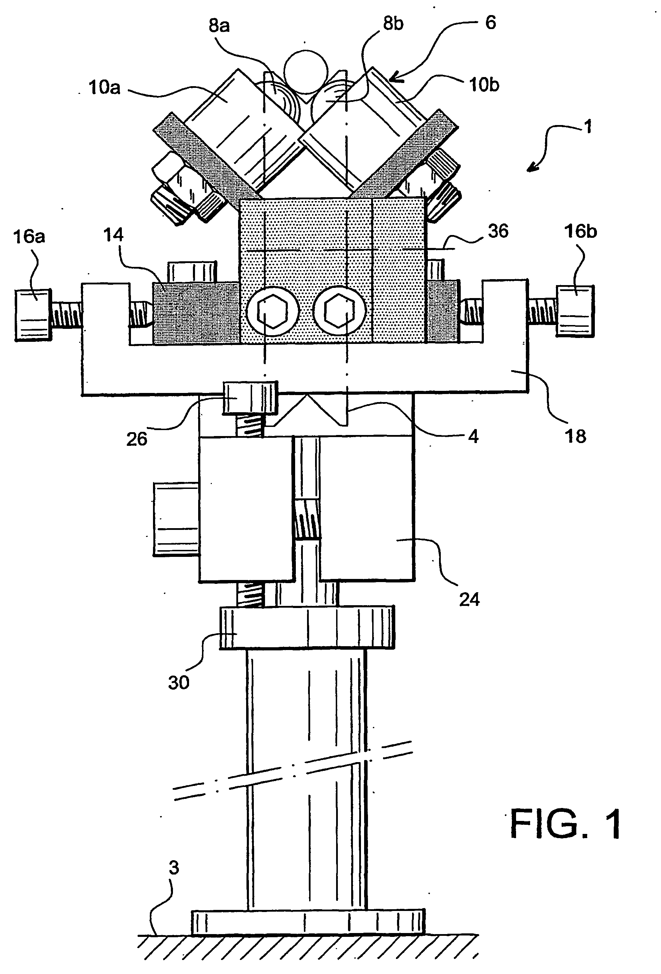

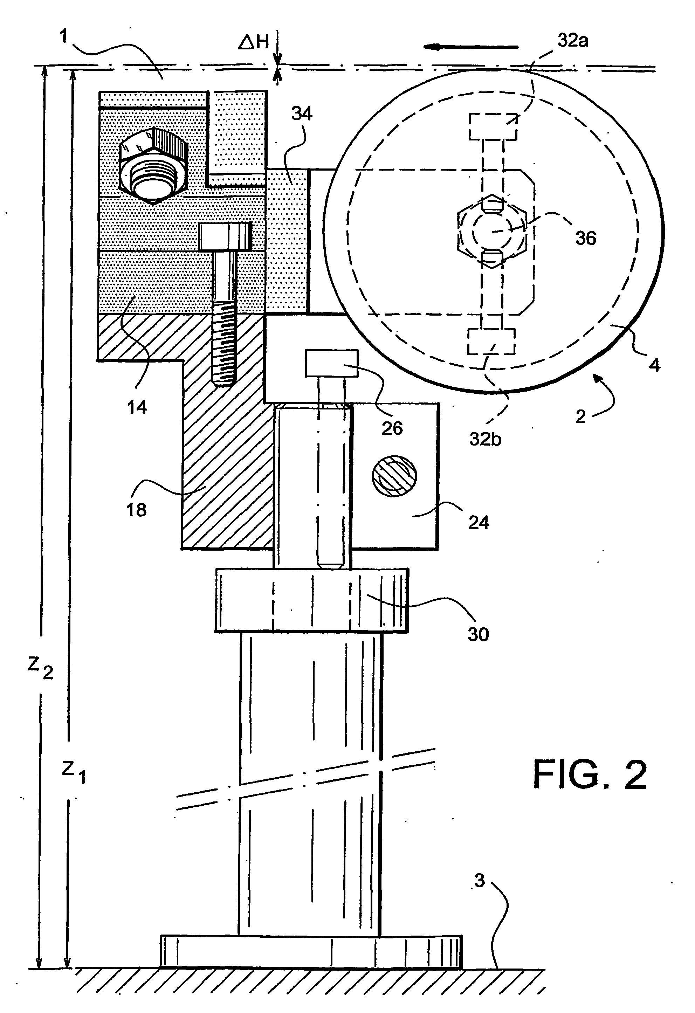

En référence aux figures 1 et 2, on voit un support 1 selon un mode de réalisation préféré de l'invention, pour éléments cylindriques en défilement (non représentés). Ce support 1 est apte à autoriser le déplacement des éléments cylindriques selon une direction parallèle à un axe de ces éléments, cette direction étant nommée la direction de défilement des éléments cylindriques et représentée par la flèche de la figure 2. Dans ce mode de réalisation préféré de l'invention, le support 1 peut également autoriser un mouvement de rotation des éléments cylindriques, cette rotation étant effectuée selon un axe de ces éléments cylindriques. Dans ce cas, les éléments cylindriques peuvent alors pivoter sur eux-mêmes.

Le support 1 est fixé de manière rigide sur un bâti 3 apte à le maintenir dans une position stable, afin d'éviter tout mouvement incontrôlé du support 1 lors du passage des éléments cylindriques.

Le support 1 comporte tout d'abord des premiers moyens de guidage 2 aptes à guider les éléments cylindriques. Ces premiers moyens de guidage 2 comprennent de préférence un galet 4 d'axe perpendiculaire à la direction de défilement des éléments cylindriques. Réalisé en matière plastique, de préférence en Ertalon (marque déposée), ce galet 4 comporte une gorge en V destinée à coopérer avec les éléments cylindriques en défilement. Le galet 4 est dimensionné pour maintenir les éléments cylindriques à une altitude z₁, cette altitude z₁ pouvant par exemple avoir le bâti 3 comme origine.

En aval dans la direction de défilement des éléments cylindriques, le support 1 comprend des seconds moyens de guidage 6. Ces seconds moyens de guidage sont également aptes à guider les éléments cylindriques selon la direction requise, mais peuvent aussi, de façon préférentielle, permettre la rotation de ces éléments cylindriques sur eux-mêmes.

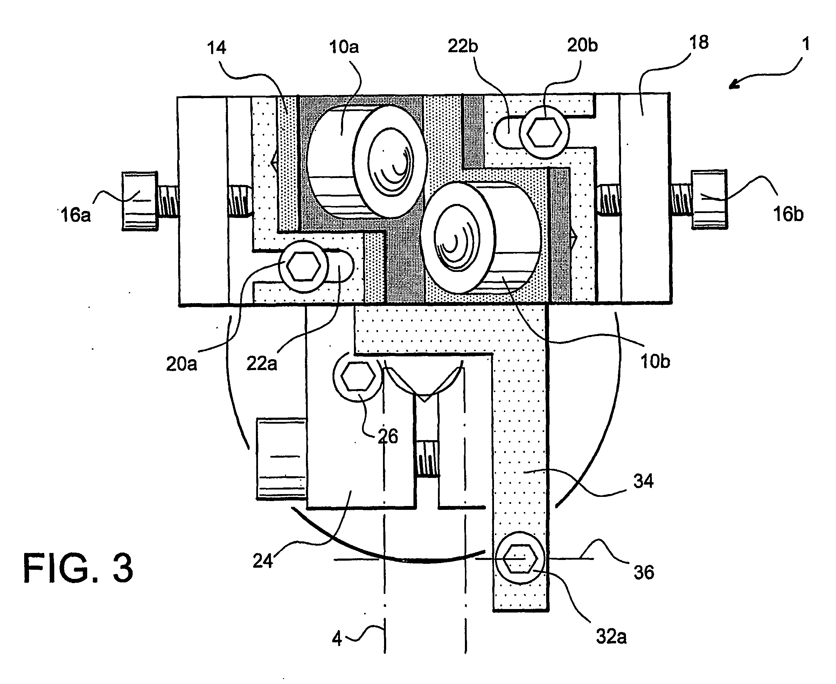

En référence à la figure 1 et à la figure 3, les seconds moyens de guidage 6 comprennent un système de billes porteuses, comportant de préférence deux billes porteuses 8a,8b aptes à être en contact avec les éléments cylindriques, les deux billes porteuses 8a,8b se situant respectivement dans des logements 10a,10b. A l'intérieur de ces logement 10a,10b, ces billes porteuses 8a,8b reposent sur une pluralité de billes secondaires (non représentées). Les billes porteuses 8a,8b sont réalisées de préférence en acier inoxydable.

Les logements 10a,10b sont disposés de façon inclinée. En effet, dans ce mode de réalisation préféré de l'invention, les logements sont inclinés à 45° de part et d'autre d'un axe principal du support, cet axe principal étant perpendiculaire à la direction de défilement des éléments cylindriques. De plus, les deux billes porteuses 8a,8b sont positionnées de telle sorte que l'une d'entre elles se situe en amont de l'autre, dans la direction de défilement des éléments cylindriques.

Les seconds moyens de guidage sont alors positionnés pour guider les éléments cylindriques à une altitude z₂, toujours avec le bâti 3 pour origine, cette altitude z₂ étant supérieure à l'altitude z₁. Les seconds moyens de guidage 6 sont tels que les frottements résultant de leur contact avec les éléments cylindriques, lors du défilement de ces derniers, sont plus faibles que les frottements résultant du contact entre les premiers moyens de guidage et ces mêmes éléments cylindriques.

La disposition particulière adoptée entre les premiers et les seconds moyens de guidage 2 et 6 se révèle avoir un intérêt lors du défilement des éléments cylindriques.

En fonctionnement, un élément cylindrique arrivant à proximité du support 1 se présente dans une position basse par rapport aux premiers moyens de guidage 2. Cette position provient du fait qu'une partie aval de l'élément cylindrique se trouve en porte-à-faux et est donc soumise à la flexion. Les premiers moyens de guidage 2 ont alors pour but de redresser la partie de l'élément située en porte-à-faux, afin que l'ensemble de l'élément cylindrique se situe dans un plan sensiblement horizontal. C'est lors de ce contact entre le galet 4 et l'élément cylindrique que l'on assiste à un phénomène d'arrachement de particules de l'élément cylindrique, ce phénomène provenant particulièrement du défaut d'alignement entre les différents supports 1 lorsqu'ils sont disposés les uns à côté des autres. Un glissement a donc lieu entre cet élément cylindrique et les flancs de la gorge en V du galet 4.

L'élément cylindrique continue son mouvement sur le support 1 et entre ensuite rapidement en contact avec les seconds moyens de guidage 6. Ces seconds moyens de guidage 6, situés en aval dans la direction de défilement des éléments cylindriques, sont positionnés de manière à faire perdre le contact entre les premiers moyens de guidage 2 et l'élément cylindrique, lorsque ce dernier entre en contact avec les seconds moyens de guidage 6. En d'autres termes, lors du défilement des éléments cylindriques, les seconds moyens de guidage 6 se substituent aux premiers moyens de guidage 2. Ainsi, les billes porteuses 8a,8b peuvent prendre le relais du galet 4 et par conséquent, limiter le phénomène d'arrachement des particules en raison des frottements quasi nuls de ces billes porteuses 8a,8b sur les éléments cylindriques. De plus, lorsque l'on désire effectuer une rotation des éléments cylindriques, celle-ci se fait sur les billes porteuses 8a,8b, alors que la majeure partie des particules arrachées se situe sur le galet 4. La surface extérieure des éléments cylindriques est donc épargnée des marquages circulaires provenant du dépôt inévitable de particules sur les galets.

En fonctionnement, il apparaît nécessaire de se munir de premiers moyens de guidage 2 afin de rétablir la position de l'élément cylindrique en porte-à-faux. C'est la raison pour laquelle on utilise de façon préférentielle un galet 4 permettant d'éviter un choc frontal entre les billes porteuses 8a,8b ou leur logement 10a,10b, et les éléments cylindriques en défilement. Cependant, on cherche à obtenir un contact entre le galet 4 et l'élément cylindrique le plus court possible dans le temps, afin d'éviter le phénomène d'arrachement des particules, tout en assurant un redressement des éléments cylindriques. A titre d'exemple, pour satisfaire ces besoins, la différence entre l'altitude z₂ et l'altitude z₁ est d'environ 0,5mm. De plus, l'écartement entre le sommet du galet 4 et les billes porteuses 8a,8b est d'environ 70mm.

Chaque support 1 comprend également des systèmes de réglage en raison de la nécessité de réaliser un alignement entre ces différents supports 1, lorsque ceux-ci sont placés les uns à côté des autres.

On note tout d'abord un système de réglage latéral de l'ensemble formé par les premiers et les seconds moyens de guidage 2 et 6, la direction latérale correspondant à la direction perpendiculaire à la direction de défilement des éléments cylindriques, dans un plan horizontal. Les premiers et les seconds moyens de guidage 2 et 6 étant fixes les uns par rapport aux autres dans cette direction latérale, un simple système de réglage s'appliquant sur un support 14 des seconds moyens de guidage 6 est par conséquent suffisant. En référence aux figures 1 et 3, ce système comprend deux vis 16a,16b vissées en regard l'une de l'autre dans un socle 18 sur lequel repose le support 14, chacune de ces vis 16a,16b étant destinée à être en contact avec ce support 14. Ces vis 16a,16b sont disposées de manière à pouvoir se déplacer dans la direction latérale. Un simple ajustement de celles-ci permet alors la réalisation d'un alignement latéral des moyens de guidage 2 et 6 des différents supports 1. On note que ce système de réglage comprend également deux vis de guidage et de serrage 20a,20b, coopérant respectivement avec deux gorges 22a,22b du support 14. Ces vis 22a,22b ont la double fonction d'autoriser le déplacement du support 14 dans la direction latérale lorsqu'elles sont desserrées et le maintien de ce support 14 sur le socle 18 une fois qu'il est correctement positionné.

A ce système de réglage latéral, on peut ajouter un système de réglage vertical de l'ensemble formé par les premiers et les seconds moyens de guidage 2 et 6. Ce réglage s'effectue dans la direction de l'axe principal du support. En référence à la figure 2, une vis de réglage 26 se situe dans un premier corps mobile 24 et un second corps fixe 30. Le premier corps mobile 24 est solidaire du socle 18 alors que le second corps fixe 30 est solidaire du bâti 3.

Lors d'un vissage de la vis 26, le premier corps mobile 24 est translaté verticalement par rapport à cette vis 26, alors que le second corps fixe 30 est bloqué en translation par rapport à cette même vis 26. Cet arrangement permet par l'intermédiaire du déplacement vertical du corps mobile 24, de régler l'altitude de l'ensemble formé par les premiers 2 et les seconds moyens de guidage 6.

Selon ce mode préféré de réalisation de l'invention, le support 1 comprend des moyens aptes à régler la différence entre l'altitude z₁ et l'altitude z₂. Ces moyens s'ajoutent donc au système de réglage vertical précédemment décrit, qui ne concerne que le réglage de l'altitude de l'ensemble formé par les premiers et les seconds moyens de guidage 2 et 6. En revanche, ces moyens aptes à régler la différence d'altitude ne répondent pas à une nécessité d'alignement entre les moyens de guidage 2,6 des différents supports 1, mais s'attachent à favoriser le mieux possible, le passage de l'élément cylindrique des premiers moyens de guidage 2 vers les seconds moyens de guidage 6. Un réglage optimal de la différence d'altitude entre ces deux moyens permet ainsi d'éviter le choc frontal entre l'élément cylindrique et les seconds moyens de guidage 6. De préférence, la différence d'altitude ΔH entre l'altitude z₂ et l'altitude z₁, symbolisée sur la figure 2, est de quelques dixièmes de millimètre.

Ces moyens aptes à régler la différence d'altitude comprennent deux vis 32a,32b disposées verticalement et en regard dans un corps 34 supportant le galet 4. Le déplacement de ces vis 32a,32b entraîne le déplacement d'un axe du galet 4 dans des fentes verticales formées dans le corps 34, solidaire du support 14. Cet agencement particulier procure donc un réglage fin, permettant d'ajuster correctement les positions verticales relatives des premiers et des seconds moyens de guidage 2 et 6.

L'invention concerne également un transporteur d'éléments cylindriques comprenant au moins un support 1 tel que décrit ci-dessus. Chaque support 1 est apte à autoriser le défilement des éléments cylindriques. A titre d'exemple, pour des éléments cylindriques d'une longueur d'environ 4m, les différents supports 1 sont espacés d'une longueur de 60cm. Cet exemple concerne un transporteur pour des tubes en Zircaloy (marque déposée) dans lesquels on désire introduire des pastilles d'un combustible se composant notamment d'oxyde mixte d'uranium et de plutonium, afin de former les éléments constitutifs d'un coeur de réacteur nucléaire.

De plus, l'invention se rapporte à un procédé de transport d'éléments cylindriques sur au moins un support 1 tel que décrit précédemment. Les éléments cylindriques, lors de leur passage sur chaque support 1, subissent différentes étapes successives.

Tout d'abord, ces éléments cylindriques subissent un guidage primaire à l'aide des premiers moyens de guidage 2. Celui-ci est effectué par le galet 4 redressant la partie aval des éléments cylindriques se situant en porte-à-faux.

Une fois ce guidage primaire terminé, les éléments cylindriques subissent un guidage secondaire se substituant au guidage primaire. Ce guidage secondaire est réalisé à l'aide des seconds moyens de guidage 6, les frottements résultant du guidage secondaire étant plus faibles que les frottements résultant du guidage primaire. Ce guidage secondaire est réalisé à l'aide des billes porteuses 8a,8b, également aptes à autoriser la rotation des éléments cylindriques selon leur axe. A titre d'exemple, cette rotation est particulièrement intéressante lorsque l'on désire effectuer une opération de soudage à l'extrémité des éléments cylindriques. Pour reprendre l'exemple précédent, le cas peut notamment se présenter lorsque les tubes remplis de pastilles doivent être fermés à l'aide d'un bouchon soudé sur leur extrémité.

## Revendications

1. Support (1) pour éléments cylindriques en défilement, ce support comprenant des premiers moyens de guidage (2) aptes à guider les éléments cylindriques à une altitude z₁, **caractérisé en ce qu'**en aval dans une direction de défilement des éléments cylindriques, ledit support (1) comprend des seconds moyens de guidage (6) aptes à guider les éléments cylindriques à une altitude z₂ supérieure à z₁, les frottements entre lesdits seconds moyens de guidage (6) et les éléments cylindriques étant plus faibles que les frottements entre lesdits premiers moyens de guidage (2) et les éléments cylindriques.

2. Support (1) selon la revendication 1, **caractérisé en ce que** lesdits seconds moyens de guidage (6) sont aptes à autoriser une rotation des éléments cylindriques autour d'un axe de ces éléments cylindriques.

3. Support (1) selon la revendication 1 ou la revendication 2, **caractérisé en ce que** les seconds moyens de guidage (6) comprennent au moins deux billes porteuses (8a,8b) destinées à être en contact avec lesdits éléments cylindriques.

4. Support (1) selon la revendication 3, **caractérisé en ce que** lesdites billes porteuses (8a,8b) sont réalisées en acier inoxydable.

5. Support (1) selon la revendication 3 ou la revendication 4, **caractérisé en ce que** chaque bille porteuse (8a,8b) repose sur une pluralité de billes secondaires situées à l'intérieur d'un logement (10a,10b) retenant la bille porteuse (8a,8b).

6. Support (1) selon la revendication 5, **caractérisé en ce que** les seconds moyens de guidage (6) comprennent deux billes porteuses (8a,8b) ayant chacune leur logement (10a,10b) incliné à 45° par rapport à un axe principal du support perpendiculaire à la direction de défilement des éléments cylindriques.

7. Support (1) selon la revendication 6, **caractérisé en ce que** les deux billes porteuses (8a,8b) sont positionnées de telle sorte que l'une d'entre elles se situe en amont de l'autre, dans la direction de défilement des éléments cylindriques.

8. Support (1) selon l'une quelconque des revendications précédentes, **caractérisé en ce que** le support (1) comprend un système de réglage latéral de l'ensemble formé par les premiers (2) et les seconds moyens de guidage (6), ainsi qu'un système de réglage vertical de ce même ensemble formé par les premiers (2) et les seconds moyens de guidage (6).

9. Support (1) selon l'une quelconque des revendications précédentes, **caractérisé en ce que** le support (1) comprend des moyens aptes à régler la différence entre l'altitude z₁ et l'altitude z₂.

10. Support (1) selon l'une quelconque des revendications précédentes, **caractérisé en ce que** la différence entre l'altitude z₂ et l'altitude z₁ est d'environ 0,5mm.

11. Support (1) selon l'une quelconque des revendications précédentes, **caractérisé en ce que** les premiers moyens de guidage (2) comprennent un galet (4) en forme de V.

12. Transporteur d'éléments cylindriques **caractérisé en ce qu'**il comprend au moins un support (1) selon l'une quelconque des revendications 1 à 11, chaque support (1) étant apte à autoriser le défilement desdits éléments cylindriques.

13. Procédé de transport d'éléments cylindriques sur au moins un support (1) selon l'une quelconque des revendications 1 à 11, **caractérisé en ce que** les éléments cylindriques, lors de leur passage sur chaque support (1), subissent les étapes suivantes :
- un guidage primaire à l'aide de premiers moyens de guidage (2),
- un guidage secondaire se substituant au guidage primaire à l'aide de seconds moyens de guidage (6), les frottements résultant du guidage secondaire étant plus faibles que les frottements résultant du guidage primaire.

## Patentansprüche

1. Stütze (1) für zu fördernde zylindrische Elemente, wobei diese Stütze erste Führungsmittel (2) umfasst, die dazu ausgelegt sind, die zylindrischen Elemente in einer Höhe z₁ zu führen, **dadurch gekennzeichnet, dass** die Stütze (1) stromabwärts in einer Förderrichtung der zylindrischen Elemente zweite Führungsmittel (6) umfasst, die dazu ausgelegt sind, die zylindrischen Elemente in einer Höhe z₂ größer als z₁ zu führen, wobei die Reibungen zwischen den zweiten Fördermitteln (6) und den zylindrischen Elementen kleiner sind als die Reibungen zwischen den ersten Führungsmitteln (2) und den zylindrischen Elementen.

2. Stütze (1) nach Anspruch 1, **dadurch gekennzeichnet, dass** die zweiten Führungsmittel (6) dazu ausgelegt sind, eine Rotation der zylindrischen Elemente um eine Achse dieser zylindrischen Elemente herum zu ermöglichen.

3. Stütze (1) nach Anspruch 1 oder Anspruch 2, **dadurch gekennzeichnet, dass** die zweiten Führungsmittel (6) wenigstens zwei Tragkugeln (8a, 8b) umfassen, die dazu ausgelegt sind, in Kontakt mit den zylindrischen Elementen zu sein.

4. Stütze (1) nach Anspruch 3, **dadurch gekennzeichnet, dass** die Tragkugeln (8a, 8b) aus rostfreiem Stahl hergestellt sind.

5. Stütze (1) nach Anspruch 3 oder Anspruch 4, **dadurch gekennzeichnet, dass** jede Tragkugel (8a, 8b) auf einer Mehrzahl von Sekundärkugeln ruht, die innerhalb einer Aufnahme (10a, 10b) angeordnet sind, welche die Tragkugel (8a, 8b) hält.

6. Stütze (1) nach Anspruch 5, **dadurch gekennzeichnet, dass** die zweiten Führungsmittel (6) zwei Tragkugeln (8a, 8b) umfassen, deren Aufnahme (10a, 10b) jeweils um 45° bezüglich einer Hauptachse der Stütze orthogonal zur Förderrichtung der zylindrischen Elemente geneigt ist.

7. Stütze (1) nach Anspruch 6, **dadurch gekennzeichnet, dass** die zwei Tragkugeln (8a, 8b) derart positioniert sind, dass sich die eine von ihnen in der Förderrichtung der zylindrischen Elemente stromaufwärts der anderen befindet.

8. Stütze (1) nach einem der vorhergehenden Ansprüche, **dadurch gekennzeichnet, dass** die Stütze (1) ein System zur Seitenregelung der Gesamtanordnung umfasst, die durch die ersten (2) und die zweiten Führungsmittel (6) gebildet ist, sowie ein System zur Vertikalregelung dieser gleichen Gesamtanordnung, die durch die ersten (2) und die zweiten Führungsmittel (6) gebildet ist.

9. Stütze (1) nach einem der vorhergehenden Ansprüche, **dadurch gekennzeichnet, dass** die Stütze (1) Mittel umfasst, die dazu ausgelegt sind, die Differenz zwischen der Höhe z₁ und der Höhe z₂ zu regeln.

10. Stütze (1) nach einem der vorhergehenden Ansprüche, **dadurch gekennzeichnet, dass** die Differenz zwischen der Höhe z₂ und der Höhe z₁ ungefähr 0,5 mm beträgt.

11. Stütze (1) nach einem der vorhergehenden Ansprüche, **dadurch gekennzeichnet, dass** die ersten Führungsmittel (2) eine V-förmige Rolle (4) umfassen.

12. Transporteinrichtung für zylindrische Elemente, **dadurch gekennzeichnet, dass** sie wenigstens eine Stütze (1) nach einem der Ansprüche 1 bis 11 umfasst, wobei jede Stütze (1) dazu ausgelegt ist, das Fördem der zylindrischen Elemente zu ermöglichen.

13. Verfahren zum Transport zylindrischer Elemente auf wenigstens einer Stütze (1) nach einem der Ansprüche 1 bis 11, **dadurch gekennzeichnet, dass** die zylindrischen Elemente während ihres Vorbeilaufens auf jeder Stütze (1) die nachfolgenden Schritte durchlaufen:
- eine Primärführung mit Hilfe erster Führungsmittel (2),
- eine die Primärführung ablösende Sekundärführung mit Hilfe zweiter Führungsmittel (6), wobei die aus der Sekundärführung resultierenden Reibungen kleiner sind als die aus der Primärführung resultierenden Reibungen.

## Claims

1. Support (1) for rolling cylindrical elements, this support comprising first guide means (2) capable of guiding the cylindrical elements at a height z₁, **characterised in that** downstream in the direction in which the cylindrical elements roll, the said support (1) comprises second guide means (6) capable of guiding the cylindrical elements at a height z₂ higher than z₁, the friction between the said second guide means (6) and the cylindrical elements being lower than the friction between the first guide means (2) and the cylindrical elements.

2. Support (1) according to claim 1, **characterised in that** the said second guide means (6) are capable of authorising a rotation of the cylindrical elements around an axis of these cylindrical elements.

3. Support (1) according to claim 1 or 2, **characterised in that** the second guide means (6) comprise at least two ball bearings (8a, 8b) designed to be in contact with the said cylindrical elements.

4. Support (1) according to claim 3, **characterised in that** the said ball bearings (8a, 8b) are made of stainless steel.

5. Support (1) of claim 3 or 4, **characterised in that** each ball bearing (8a, 8b) rests on a number of secondary balls located inside a housing (10a, 10b) holding the ball bearing (8a, 8b).

6. Support (1) according to claim 5, **characterised in that** the second guide means (6) comprise two ball bearings (8a, 8b) each having their housing (10a, 10b) angled at 45° with respect to a main axis of the support, perpendicular to the direction in which the cylindrical elements roll.

7. Support (1) according to claim 6, **characterised in that** the two ball bearings (8a, 8b) are positioned such that one of them is situated upstream of the other, in the direction in which the cylindrical elements roll.

8. Support (1) according to any of the previous claims, **characterised in that** the support (1) comprises a lateral adjustment system for the assembly formed by the first (2) and the second (6) guide means, as well as a vertical adjustment system for this same assembly formed by the first (2) and the second (6) guide means.

9. Support (1) according to any of the previous claims, **characterised in that** the support (1) comprises means capable of adjusting the difference between the height z₁ and the height z₂.

10. Support (1) according to any of the previous claims, **characterised in that** the difference between the height z₁ and the height z₂ is approximately 0.5 mm.

11. Support (1) according to any of the previous claims, **characterised in that** the first guide means (2) comprise a Vee shaped roller (4).

12. Cylindrical element transport device, **characterised in that** it comprises at least one support (1) according to any of claims 1 to 11, each support (1) being capable of authorising the rolling of the said cylindrical elements.

13. Method of transporting cylindrical elements on at least one support (1), according to any of claims 1 to 11, **characterised in that** the cylindrical elements, when they pass on each support (1), undergo the following steps:
- primary guiding with the aid of first guide means (2),
- secondary guiding substituting the primary guiding with the aid of second guide means (6), the friction resulting from the secondary guiding being lower than the friction resulting from the primary guiding.
